Europäisches Patentamt

European Patent Office

Office européen des brevets

(11) Publication number: **0 254 346 B1**

# EUROPEAN PATENT SPECIFICATION

(45) Date of publication of patent specification: **13.01.93**   (51) Int. Cl.5: **C08L 53/02**

(21) Application number: **87201297.6**

(22) Date of filing: **07.07.87**

The file contains technical information submitted
after the application was filed and not included in
this specification

(54) **Thermoplastic compositions and process for the preparation thereof.**

(30) Priority: **07.07.86 US 882987**

(43) Date of publication of application:
**27.01.88 Bulletin 88/04**

(45) Publication of the grant of the patent:
**13.01.93 Bulletin 93/02**

(84) Designated Contracting States:
**BE DE ES FR GB IT NL SE**

(56) References cited:
**US-A- 3 686 365**
**US-A- 4 006 116**
**US-E- 27 145**

(73) Proprietor: **SHELL INTERNATIONALE RE-
SEARCH MAATSCHAPPIJ B.V.**
**Carel van Bylandtlaan 30**
**NL-2596 HR Den Haag(NL)**

(72) Inventor: **Himes, Glenn Roy**
**11615 Normont Drive**
**Houston Texas 77070(US)**
Inventor: **Sanders, Andrea**
**1226 Crossfield Drive**
**Katy Texas 77450(US)**

**Description**

The invention relates to a thermoplastic composition, to a process for the preparation thereof and to shaped articles containing said compositions.

Thermoplastic compositions containing hydrogenated block copolymers having a configuration A-B-A are known from, U.S. patent specification No. Reissue 27,145, which discloses block copolymers having an A-B-A configuration wherein the two terminal blocks A comprise thermoplastic polymer blocks of vinyl arene such as polystyrene, and the mid-block, block B, is a polymer block of a selectively hydrogenated conjugated diene. The proportion of the thermoplastic terminal blocks to the center elastomeric polymer block and the relative molecular weight of each of these blocks is balanced to obtain a rubber having a combination of properties, such that it behaves as a vulcanized rubber without requiring the actual step of vulcanization.

While these block copolymers have a number of outstanding technical advantages, one of their principal limitations lies in their ability to absorb oil. The ability of a block copolymer to absorb oil is essentially due to its hydrocarbon character which is not materially changed by hydrogenating the copolymer, a process usually targeted for the center polymeric diene block. Hydrogenation may be effected selectively on individual blocks, as disclosed in U.S. patent specification No. Reissue 27,145. In this teaching, the hydrogenated block copolymers have an A-B-A configuration prior to hydrogenation, wherein each A block is an alkenyl-substituted aromatic hydrocarbon polymer block and each B block is a butadiene polymer block with from 7.5 to 67 mol per cent of vinyl, or 1,2 configuration, condensed butadiene units in the butadiene polymer block. The Reissue patent specification No. 27,145 essentially teaches the composition and properties of a block copolymer having 35 to 55 mol percent of condensed butadiene units in a 1,2 configuration. It has now been found that "pure" block low 1,2 copolymers can be diluted substantially with other block copolymers, resins, etc. and the resultant mixture will still retain a remarkable ability to resist absorption of oil. Further, the presence of block copolymer of "normal" 1,2 content, i.e., about 40%, preserves the rubbery character desired in such compounds.

A process for hydrogenating block copolymers is disclosed in U.S. Patent Reissue 27,145. Prior to hydrogenation each A block is a polymerized monoalkenyl aromatic hydrocarbon block having an average molecular weight of about 4,000 to 115,000; each B block is a polymerized butadiene hydrocarbon block having an average molecular weight of about 20,000 to 450,000. Further, each A block constitutes from 2 to 33 weight per cent of the copolymer, and each B block contains from 35 to 55 mol per cent of condensed butadiene units in a 1,2 configuration, as measured by a standard NMR technique. Finally, the unsaturation of the B blocks can be reduced to less than 10% of the unsaturation of the non-hydrogenated polymer.

A second process for hydrogenating block copolymers is taught in U.S. patent specification 4,412,087. This patent specification discloses a hydrogenated random block conjugated diene-monovinylarene copolymer with a terminal monovinylarene block having a diene content in the range of 44 to 70 weight per cent and a normalized vinyl in the range of 30.2 to 51.3%.

Oil absorption for this type of hydrogenated "pure" low vinyl block copolymer is about 5 to 40%, compared to 50-100% for block polymer having conventional vinyl content. It has now been found that when the "pure" low vinyl block copolymer is blended with the conventional higher vinyl block copolymer, the resistance to oil absorption remains low but the tensile strength of the blend increases.

Table 1 hereinafter illustrates this correlation of vinyl content to both resistance to oil absorption and improved tensile strength for two "pure" low vinyl S-EB-S (styrene-ethylene/butylene- styrene) copolymers, B and Ct compared to A which is an S-EB-S block copolymer having conventional 1,2 configuration in the EB block, B has substantially lower 1,2 configuration, and C is like B, but having even lower 1,2 configuration in the EB block.

TABLE 1

| Effect of 1,2 content on oil absorption | | | |
|---|---|---|---|
| Block Copolymer | 1,2 content (w%) | Oil[1] absorption (w%) 16 h at Room Temp. | Tensile strength[2] (N/cm$^2$) |
| A | 42.5 | 84 | 793 |
| B | 30.7 | 30 | 2724 |
| C | 23.0 | 8.8 | 2775 |

1) Johnson & Johnson Baby Oil.
2) Tested on pure polymer, zero oil content.

A blend of block copolymers has long been needed with the ability to resist oil absorption at ambient temperatures and have better tensile strength than known blends. The present invention has been developed in order to provide a blend using A-B-A block copolymers which exhibit the desired tensile strength properties and an increased resistance to oil absorption (in the range of about 4% to about 30% at ambient temperatures), and improved tensile strength by blending together conventional S-EB-S block copolymers with conventional amounts of vinyl in the B block, and

S-EB-S block copolymers with low amounts of vinyl in the B block, such as between about 18 to 34 mol per cent of the condensed butadiene units having a 1,2 configuration.

Contemplated uses for the blend of normal 1,2 content Kraton G and low 1,2 content Kraton G are the following:

Wax flexibilizing;

Impact resistance in blends with other polymers;

Oil resistant films and fibres, i.e., for diapers and other clothing;

Oil resistant automobile components;

High tensile strength, oil-resistant wire and cable compounds;

Blends of wax-based antiozonants for diene rubbers, for use in dynamic applications;

Stress-crack inhibitors for polyethylene;

Higher strength coextrusion tie layers with improved compatibility with polyolefin substrates;

Tear resistant polyethylene film;

Various oil resistant applications, including hoses, boots, shoe soles, and similar items; and

Gels - the blend will form gels at very low concentrations.

"Kraton G" is a trade mark for a selectively hydrogenated styrene-ethylene/butylene-styrene (S-EB-S) block copolymer.

The term "having a superior tensile strength" refers herein to the tensile strength of the novel blend of low vinyl and conventional vinyl elastomeric block copolymers which is higher than the tensile strength of a similar compound based on about 100% normal vinyl content elastomeric block copolymer.

The term "phr" throughout refers to parts by weight per hundred parts by weight of the total elastomeric block copolymer.

Surprisingly, a thermoplastic blend with the ability to absorb less than 40% of an oil, and having a superior tensile strength has now been found:

Accordingly, the invention provides a thermoplastic composition which comprises:- (a) 80 to 20 parts by weight of a normal vinyl content selectively hydrogenated elastomeric block copolymer having the general configuration A-B-A, wherein:

(i) each A block is a polymerized monoalkenyl aromatic hydrocarbon block having an average molecular weight of 4000 to 115,000;

(ii) said A blocks, in combination, comprise 5 to 35% by weight of the entire normal vinyl content elastomeric block copolymer;

(iii) the B block is a polymerized selectively hydrogenated block of a conjugated alkadiene having in the range of from 4 to 8 carbon atoms per molecule consisting, before the selective hydrogenation, of 35 to 50 mol per cent condensed alkadiene units in the 1,2 configuration and said B block has an average molecular weight of between 20,000 and 450,000;

(b) 20 to 80 parts by weight of a selectively hydrogenated low vinyl content elastomeric block copolymer having the general configuration A-B-A wherein:

(i) each A block is a polymerized monoalkenyl aromatic hydrocarbon block having an average molecular weight of 4000 to 115,000;

(ii) said A blocks, in combination, comprise 5 to about 35% by weight of the entire low vinyl content elastomeric block copolymer;

(iii) the B block is a polymerized selectively hydrogenated block of a conjugated alkadiene having in the range of from 4 to 8 carbon atoms per molecule consisting, before the selective hydrogenation, of 18 to 34 mol per cent condensed alkadiene units in the 1,2 configuration, and said B block has an average molecular weight of between 20,000 and 450,000; and

(c) 0.001 to 50 phr of a polyolefin, the term "phr" referring to parts by weight per hundred parts by weight of the total elastomeric block copolymer.

The invention further provides a process for the preparation of the thermoplastic composition according to the invention, with the ability to absorb less than 40% of an oil and having a superior tensile strength. This process comprising the steps of:

(a) forming a low vinyl content selectively hydrogenated elastomeric block copolymer by the following steps (i) to (iv):

(i) polymerizing a monoalkenyl arene in the presence of an inert hydrocarbon solvent and a lithium-alkyl catalyst whereby a polymer block A is formed and said polymer block A has an average molecular weight of between 4,000 and 115,000 and said block A is terminated with a lithium ion;

(ii) adding a conjugated alkadiene having in the range of from 4 to 8 carbon atoms per molecule to the lithium terminated block and block copolymerizing it with said first block in the presence of a polar compound of the group consisting of ethers, thioethers, and tertiary amines, the molar ratio of said polar compound to lithium-alkyl catalyst being between 7 and 70, to thereby form a block copolymer terminated with lithium having 18 to 34 mol per cent of 1,2 configuration condensed alkadiene units in said B block and said alkadiene polymer B block having an average molecular weight of between 20,000 and 450,000;

(iii) adding thereto a monoalkenyl arene and block polymerizing it with the block copolymer of (ii) to form a block copolymer having the general configuration A-B-A or, alternatively, adding thereto a coupling agent to the A-B' block copolymer formed in step (ii) where B' is about one-half the molecular weight of B, thereby forming a polymer of the type A-B'-(B'-A)$_n$, where n is an integer from 1 to 5,

(iv) selectively hydrogenating the block copolymer, whereby the unsaturation of the diene block copolymer block B is reduced to less than 10% of its original value and therein forming a low vinyl content elastomeric block copolymer;

(b) forming a normal vinyl content elastomeric block copolymer having the general configuration A-B-A, wherein:

(i) each A block is a polymerized monoalkenyl aromatic hydrocarbon block having an average molecular weight of 4000 to 115,000;

(ii) said A blocks, in combination, comprise 5 to 35% by weight of the entire normal vinyl content elastomeric block copolymer;

(iii) the B block is a polymerized block of a conjugated alkadiene having in the range of from 4 to 8 carbon atoms per molecule consisting of 35 to 50 mol per cent condensed alkadiene units in the 1,2 configuration and said B block has an average molecular weight of between 20,000 and 450,000;

(iv) hydrogenating the block copolymer, whereby the unsaturation of the diene block copolymer block B is reduced to less than 10% of its original value and therein forming a normal vinyl content elastomeric block copolymer;

(c) blending together 20 to 80 parts by weight of said low vinyl content elastomeric block copolymer with 80 to 20 parts by weight of said normal vinyl content elastomeric block copolymer and from 0.001 to 50 phr of a polyolefin;

(d) optionally adding to said blend up to 125 phr of an oil;

(e) optionally adding to said blend up to 25 phr of a heat stabilizer, a slip-agent, an antioxidant, an anti-static agent, a plasticizer, a preservative, a colorant, a processing aid and/or a lubricant; and

(f) optionally adding to said blend up to 1500 phr of a filler.

In order to have the most desirable properties of the thermoplastic composition according to the present invention, a low vinyl elastomeric block copolymer with the general configuration A-B-A is for med, and wherein the terminal blocks A, have average molecular weights of between 4,000 and 115,000, preferably between 4,000 and 40,000 and more preferably between 4,000 and 35,000, and the mid-block B has an average molecular weight of between 20,000 and 450,000, more preferably between 50,000 and 200,000 and most preferably between 50,000 and 175,000. In order to promote the optimum combination of physical properties, the terminal blocks A comprise between 5 and 35% by weight of the total low vinyl block copolymer, preferably between 8 and 35% by weight of the total low vinyl block copolymer.

The polymer's non-elastomeric end blocks can comprise homopolymers or copolymers prepared from alkenyl aromatic hydrocarbons, and more particularly prepared from vinyl aromatic hydrocarbons. If a vinyl aromatic hydrocarbon is used, the aromatic hydrocarbon may be either monocyclic or polycyclic. Typical monomers usable within the scope of the invention are for example styrene, $\alpha$-methylstyrene, p-methyl-styrene, tert-butylstyrene, vinylxylene and ethyl-vinyl-xylene. The most preferred monomer is styrene. Mixtures of monomers, such as styrene and $\alpha$-methylstyrene, may be utilized in place of the above-mentioned homopolymers or copolymers. The two "A", end blocks may be identical or different, so long as they meet the generic description of these types of end blocks, insofar as their thermoplastic character is concerned and as differentiated from the elastomeric portion of the mid block or center "B" block.

The center block may be an elastomer, that is, a material that is capable of recovering from large deformations quickly and forcibly, and retracts within 1 min to less than 1.5 times its original length after being stretched at room temperature (18 to 29°C) to twice its length and held for 1 min before release.

The block copolymers may be produced by any well-known block polymerization or copolymerization procedure, for example, the sequential addition of monomer technique, the incremental addition of monomer technique, or the monomer coupling technique as illustrated in U.S. patent specification Nos. 3,251,905; 3,390,207; 3,598,887 and 4,219,627.

As is well-known in the block copolymer art, tapered copolymer blocks can be incorporated into a multiblock copolymer by copolymerizing a mixture of conjugated dienes and vinyl aromatic hydrocarbon monomers, utilizing the different copolymerization reactivity rates to achieve complete polymerization. Various patent specifications describe the preparation of multiblock copolymers containing tapered copolymer blocks, these include U.S. patent specification Nos. 3,251,905; 3,265,765; 3,639,521 and 4,208,356.

Conjugated dienes which are utilized to prepare the polymers and copolymers for blending with low 1,2 block copolymer and usable within the scope of the invention are those having from 4 to 8 carbon atoms per molecule and which can include, for example, 1,3-butadiene, 2-methyl-1,3-butadiene(isoprene), 2,3-dimethyl-1,3-butadiene, 1,3-pentadiene and 1,3-hexadiene. Mixtures of conjugated dienes, such as those described above, may also be used. The preferred conjugated diene for use within the scope of the invention is 1,3-butadiene.

Vinyl aromatic hydrocarbons which may be used to prepare copolymers includes styrene, o-methylstyrene, p-methylstyrene, p-tert-butylstyrene, 1,3-dimethyl styrene, $\alpha$-methylstyrene, vinylnaphthalene, and vinylanthracene. The preferred vinyl aromatic hydrocarbon usable within the scope of the invention is styrene.

It should be observed that the above-described polymers and copolymers may be readily prepared by the methods set forth hereinbefore. However, it may be preferred to use commercially available polymers to prepare the blend of low vinyl content and normal vinyl content block copolymers. If commercially available polymers are used, the number of processing steps involved in the overall process of preparing the thermoplastic composition according to the invention are reduced. The hydrogenation of these commercially available polymers and copolymers may be carried out by a variety of well established processes, including hydrogenation in the presence of catalyst such as Raney nickel, a noble metal such as platinum or palladium or an insoluble transition metal. Suitable hydrogenation processes which can be used include ones wherein the diene containing polymer or copolymer is dissolved in an inert hydrocarbon diluent such as cyclohexane and hydrogenated by reaction with hydrogen in the presence of a soluble hydrogenation catalyst. These kind of hydrogenation processes are disclosed in U.S. patent specification Nos. 3,113,986 and 4,226,952.

The catalysts employed in the process of the present invention may be defined broadly as "lithium based initiators" with alkyl lithium initiators as the preferred initiator. Other suitable initiators include lithium metal and aryl-lithium compounds, and in certain instances, dilithium initiators such as dilithium-stilbene, lithium-1-diphenyl ethylene or lithium-naphthalene. Alkyl-lithium initiators, the most preferred class of initiators, may be generally divided into normal alkyl-lithiums and branched alkyl-lithiums, the latter having a number of functional aspects making them more desirable than the former. Branched alkyl lithium initiators exhibit no disadvantageous "induction period" in the start up of the polymerization and can be used within the scope of the invention. The rate of polymerization is reasonably rapid but sufficiently steady so that it can be controlled and result in products having a relatively narrow molecular weight range.

The most preferred polymerization process to produce the low vinyl block copolymers used in the blend utilizes polymerization at temperatures in the range of about 20°C to about 100°C, preferably between about 20°C and about 65°C. The proportion of initiators will depend upon the molecular weight of the products desired, but may be varied between about 1 and about 200 parts per million based on the the weight of the monomers involved and based on which monomers are involved.

The basic polymerization process for producing the low vinyl block copolymer using the lithium-based catalysts comprises forming a solution of a first alkenyl arene monomer in an inert hydrocarbon such as alkanes, alkenes or cycloalkanes modified by the presence of the polar compounds of the group consisting of ethers, thioethers and tertiary amines. With many initiators, the presence of a polar compound is not essential in the formation of the terminal polymer blocks. Consequently, a polar compound may be introduced just prior to or simultaneously with the addition of butadiene used for the formation of the middle elastomeric branch block. Among the polar compounds which may be added in accordance with the invention are dimethyl ether, diethyl ether, ethyl methyl ether, ethyl propyl ether, dioxane, orthodimethoxybenzene, 1,2-diethoxyethane, 1-n-butoxy-2 ethoxy-ethane, dibenzyl ether, diphenyl ether, dimethyl sulfide, diethyl sulfide, tetramethylene oxide (tetrahydrofuran), tripropylamine, tributylamine, trimethylamine, triethylamine, pyridine and quinoline. Mixtures of these polar compounds also may be employed in the practice of the present invention. The proportion of polar compounds should be restricted in accordance with the limits set forth below in order to obtain the desired critical degree of branching in the center elastomeric block.

When the lithium initiator, polar compound, alkenyl aromatic monomer and inert hydrocarbon are combined, polymerization proceeds to produce the first terminal polymeric block A, having an average molecular weight between 4,000 and 115,000. This A block is terminated on one end with a lithium radical and this end is commonly referred to as a "living polymer". At this time, without further alteration or removal of this lithium radical, butadiene is injected into the system and block polymerization occurs, the presence of the polar compound becomes important in producing the desired degree of branching of the polybutadiene block. The temperature, the initiator concentration and the solvent may be adjusted at this time to optimize the desired degree of polymerization or rate of reaction. The resulting product is then typified by the general structure A-B-Li, a living polymer block of the two monomers thus far employed. After this, a second addition of an alkenyl aromatic hydrocarbon is made to produce the final terminal block "A" and resulting in the formation of a three block system A-B-A, which is the result of polymerization followed by termination with a polar terminator, such as an alcohol.

Alternatively, a coupling agent could be added after the addition of the conjugated alkadiene (step a(ii)) due to which a polymer is formed of the A-B'.(B'-A)$_n$ type, where B' is about one-half the molecular weight of B and where n is an integer from 1 to 5. Preferred coupling agents are dihaloethanes, chlorosilanes, alkoxy silanes, diesters and carbon dioxide.

Having obtained the basic polymer with the described degree of branching in the centre elastomeric butadiene polymer block, the next necessary stage is to hydrogenate the polymer in order to increase its service temperature and at the same time to improve the oxidation stability of the product. Hydrogenation may be conducted utilizing a variety of hydrogenation catalysts such as nickel on kieselguhr, Raney nickel, copper chromate, molybdenum sulphide, and finely divided platinum or other noble metals on a low surface area carrier.

Hydrogenation may be conducted at any desired temperature or pressure, for example, from about atmospheric to about 208 bar, the usual range being between about 7.9 and about 70.0 bar at temperatures from about 24 °C to about 315 °C, for times between about 0.1 and about 24 hours, preferably between about 0.2 and about 8 hours. Preferred catalysts comprise the reduced metal products obtained by reduction of cobalt, nickel, tungsten or molybdenum compounds with aluminum alkyls or hydrides. These catalysts are selective, in that the diene block is hydrogenated rapidly, while the styrene blocks are more slowly hydrogenated unless hydrogenation temperatures are increased.

Since the polybutadiene block is most susceptible to oxidative attack, it is the primary objective of hydrogenation to reduce the unsaturation of this block to an amount of less than 10% of the original unsaturation with the hydrogenation of the terminal A blocks being of less importance. With some selective catalyst, this is readily accomplished, whereas with other catalysts, the hydrogenation proceeds along the entire chain. It is preferred that terminal A blocks not be hydrogenated.

Typical low vinyl elastomeric block copolymers may be prepared by any of the usual known techniques.

It is an objective of the present invention to obtain mol per cents of condensed butadiene units with a 1,2 configuration in the block B in a range from 18 to 34 mol per cent, and most preferably, from 21 to about 31 mol per cent.

A typical styrene-butadiene-styrene (S-B-S) block copolymer within the invention has average block molecular weights of 10,000 - 125,000 - 10,000.

If a low vinyl hydrogenated S-B-S block copolymer is prepared as described hereinbefore, the properties of the resultant low vinyl block polymer can be compared to conventional normal vinyl block polymer, Table 2, which follows provides such a comparison.

Table 2

| Low Vinyl versus Normal Vinyl Block Copolymers | | |
|---|---|---|
| | Low Vinyl | Conventional |
| Precursor, per cent 1,2 in butadiene block | 27.4 | 42.5 |
| Modulus - 300% (N/cm$^2$) | 276 | 138 |
| Elongation % at break | 500 | 800 |
| Set, % | 30 | 30 |
| Oil absorption, % | 23 | 84 |

## II. The Blend

When a low vinyl elastomeric block copolymer as described in Section I of this disclosure is blended with:

(a) a conventional, normal content vinyl elastomeric block copolymer, such as Kraton G 1657, a product of the Shell Chemical Company, of Houston, Texas and

(b) a small per cent, at least 0.001 parts per hundred parts of rubber (phr), of a polyolefin, such as high density polyethylene (HDPE), then:

good resistance to oil absorption occurs, usually less than 40% oil absorption occurs and a superior tensile strength can be obtained. Also, the elongation per cent (E%) at break of the resultant blend is better than an equivalent formulation based on normal vinyl elastomeric block copolymer.

To prepare the thermoplastic composition according to the invention, 20 to 80 parts low vinyl elastomeric block copolymer is added to 80 to 20 parts normal vinyl content elastomeric block copolymer and at least 0.001 parts per hundred parts of rubber (phr) of a polyolefin, such as high density polyethylene (HDPE), low density polyethylene (LDPE), linear low density polyethylene (LLDPE), or polypropylene (PP).

Additionally, other components may be added to the composition such as up to 125 phr oil, up to 1500 phr filler, up to about 50 phr low molecular weight polystyrene; and up to 25 phr of a of heat stabilizer, a slip-agent, an antioxidant, an antistatic agent, a colorant, a flame retardant, a plasticizer, a preservative, a processing aid and/or a lubricant.

Typical polyolefins usable within the scope of the invention include: polyethylene (PE), including high density, low density, and linear low density; polypropylene (PP), various copolymers of PE and PP; and certain ethylene copolymers, such as ethylene-vinyl acetate copolymer.

Other components may be added to the thermoplastic compositions for numerous reasons, such as to lower manufacturing costs or to have ease in manufacturing. Typical oils usable within the scope of the invention include: various naphthenic and paraffinic extending oils, such as Shellflex™ 371 or Penreco™ 4434, and silicone oils.

The polystyrene to be added to the thermoplastic composition is preferably anionic polystyrene and can be obtained from alkyl lithium catalyzed polymerization of styrene. Anionic polystyrene with a molecular weight which ranges from about 2,000 to about 20,000 is the most preferred additive. Alternatively, anionic polystyrene can be prepared according to the teachings in U.S. patent specification no. 4,117,037 and used within the scope of the invention. In addition, low molecular weight polystyrenes prepared by free radical mechanisms can be used.

In preparing the thermoplastic compositions according to the invention, a variety of standard additives can be used to prepare the thermoplastic oil resistant composition. Typical examples of each additive include: dilaurylthiodipropionate as a conventional heat stabilizer; erucyl amide as a slip-agent (for example known under the trade mark "Kemamide E"); Irganox 1010 (available from Ciba-Geigy of Hawthorne, N.Y.) as an antioxidant; Emerest 2401 (available from Emery Chemicals of Cincinnati, Ohio) as an antistatic agent; titanium dioxide as a colorant; antimony oxide, Firebrake 2B (available from Bate Chemical , Ltd. of Don Mills Ontario, Canada) and/or Dechlorane +25 (available from Occidental Chemical Corp., Niagara Falls, NY) as flame retardants; Shellwax 100 (available from the Shell Chemical Company of Houston, Texas) as a processing aid.

In a preferred embodiment, the components of the thermoplastic composition according to the invention can include: 67 parts by weight Kraton G 1657, 33 parts by weight low vinyl elastomeric block copolymer having between 18 and 34 mol per cent condensed butadiene units in a 1,2, configuration, and 33 parts by weight of a polyolefin, such as high density polyethylene (HDPE). This blend composition can be called formulation A.

In an alternative preferred embodiment, the components of the thermoplastic composition can include: 67 parts by weight Kraton G 1657, 33 parts by weight low vinyl elastomeric block copolymer having between 18 and 34 mol per cent condensed butadiene units in a 1,2 configuration, and 0.001 parts by weight of a polyolefin, such as high density polyethylene (HDPE). This blend composition can be called formulation B.

In both formulations A and B, Kraton G 1657 is a composition comprising: from about 55 to about 85 parts by weight of at least one tri-block copolymer having two endblocks A and a midblock B, wherein the A blocks are monoalkenyl arene polymer blocks and the B block is a substantially completely hydrogenated conjugated diene polymer block. Further, it is preferred that the Kraton G composition have a number average molecular weight in the range from about 16,000 to about 175,000, with the number of average molecular weight of the A blocks being in the range of from about 4,000 to about 30,000. It is also preferred that for the Kraton G composition, and the monoalkenyl arene content of the copolymer be in the range of from about 10 to about 35% by weight for the tri-block copolymer.

The physical properties of formulations A and B according to the invention can be compared to control formulations C and D not according to the invention wherein control formulation C comprises 100% conventional vinyl content Kraton G polymers in ratios of (67:33) and a polyolefin and control formulation D comprises 100% of low vinyl Kraton G plus a polyolefin but without a conventional or normal vinyl content Kraton G polymer. Table 3, hereinafter, summarizes these results; the tensile strength has been determined according to ASTM-D-412 and the Shore A Hardness according to ASTM-D-2240.

Table 3

| | Oil Absorption % by weight | Tensile strength, N/cm² | Elongation % | Set % | Shore A hardness |
|---|---|---|---|---|---|
| Formulation A | 10.9 | - | - | - | 65 |
| Formulation B | 16.3 | 593 | 980 | 70 | 49 |
| Control Formulation C (Blends of 2 conventional vinyl content Kraton G polymers plus a polyolefin) | 58.0 | 186 | 600 | 13 | 30 |
| Control Formulation D (Low Vinyl Kraton G and a poly- olefin) | 3.9 | - | - | - | 76 |

The present invention will be further illustrated by the following examples.

Example I

About 33 parts by weight Kraton G 1657 was melt blended with about 67 parts by weight low vinyl Kraton G polymer having a 1,2 content of 23%, and a styrene block molecular weight of 9,800, an ethylene-butylene block molecular weight of 111,000, and a total styrene content of 11.9%; 62.5 phr Penreco 4434 oil, 10 phr low molecular weight polystyrene, 10 phr Shellwax 100, small amounts of stabilizers, colorants and release agents and about 33 phr polyolefin.

The compounds were mixed in a 260 cm³ capacity Brabender mixer using a rotor speed of 50 revolutions per minute (rpm), a body temperature of 200°C and a mixing time of 12 minutes. The mixture had the following physical properties: oil absorption, 5.3%; hardness, 71 Shore A.

Example II

About 67 parts by weight Kraton G 1657, about 33 parts by weight low vinyl Kraton G polymer, having the same molecular parameters as Kraton G 1657, but with 27.4% 1,2 content, about 10 phr of anionic polystyrene, about 62.5 phr of an oil, 10 phr Shellwax 100 and about 0.7 phr of a stabilizer were prepared under the same conditions as in Example I.

The mixture had the following physical properties: oil absorption, 25.3%; hardness, 35 Shore A; tensile strength, 345 N/cm$^2$; and Elongation (E%), 900%.

The improvements in oil resistance and tensile strength afforded by blends of normal vinyl content block copolymers and low 1,2 content block copolymers are thought to be due to the formation of crystalline regimes in the midblock phase. Crystals result from relatively long sequences of 1,4 addition polymer, which are equivalent to polyethylene (after hydrogenation), a polymer of high crystallinity. The crystals have poor solubility in various solvents, including oil. In addition, they provide a self-reinforcing character to the midblock polymer, giving high tensile strengths.

**Claims**

**Claims for the following Contracting States : BE, DE, FR, GB, IT, NL, SE**

1. A thermoplastic composition which comprises:-
   (a) 80 to 20 parts by weight of a normal vinyl content selectively hydrogenated elastomeric block copolymer having the general configuration A-B-A, wherein:
      (i) each A block is a polymerized monoalkenyl aromatic hydrocarbon block having an average molecular weight of 4000 to 115,000;
      (ii) said A blocks, in combination, comprise 5 to 35% by weight of the entire normal vinyl content elastomeric block copolymer;
      (iii) the B block is a polymerized selectively hydrogenated block of a conjugated alkadiene having in the range of from 4 to 8 carbon atoms per molecule consisting, before the selective hydrogenation, of 35 to 50 mol per cent condensed alkadiene units in the 1,2 configuration and said B block has an average molecular weight of between 20,000 and 450,000;
      (b) 20 to 80 parts by weight of a selectively hydrogenated low vinyl content elastomeric block copolymer having the general configuration A-B-A wherein:
      (i) each A block is a polymerized monoalkenyl aromatic hydrocarbon block having an average molecular weight of 4000 to 115,000;
      (ii) said A blocks, in combination, comprise 5 to 35% by weight of the entire low vinyl content elastomeric block copolymer;
      (iii) the B block is a polymerized selectively hydrogenated block of a conjugated alkadiene having in the range of from 4 to 8 carbon atoms per molecule consisting, before the selective hydrogenation, of 18 to 34 mol per cent condensed alkadiene units in the 1,2 configuration, and said B block has an average molecular weight of between 20,000 and 450,000; and
      (c) 0.001 to 50 phr of a polyolefin, the term "phr" referring to parts by weight per hundred parts by weight of the total elastomeric block copolymer.

2. A composition as claimed in claim 1, wherein the monoalkenyl aromatic hydrocarbon is styrene.

3. A composition as claimed in claim 1 or 2, wherein the conjugated diene is 1,3-butadiene.

4. A composition as claimed in any one of the preceding claims, wherein the polyolefin is a high density polyethylene.

5. A composition as claimed in any one of the preceding claims, wherein block B in (b)(iii) consists, before the selective hydrogenation, of 21-31 mol per cent condensed butadiene units in the 1,2-configuration.

6. A composition as claimed in any one of the preceding claims which further comprises:-
   (a) up to 125 phr of an oil;
   (b) up to 50 phr of an anionic polystyrene; and
   (c) up to 25 phr of a member of a stabilizer, a slip-agent, an antioxidant, an antistatic agent, a plasticizer, a preservative, a colorant, a processing aid, and/or a lubricant;
   (d) up to 1500 phr of a filler,
   the term "phr" referring to parts by weight per hundred parts by weight of the total elastomeric block copolymer.

EP 0 254 346 B1

7. A process for the preparation of a thermoplastic composition as claimed in any one of the preceding claims which process comprises:-

(a) forming a low vinyl content selectively hydrogenated elastomeric block copolymer by the following steps (i) to (iv):

(i) polymerizing a monoalkenyl arene in the presence of an inert hydrocarbon solvent and a lithium-based catalyst whereby a polymer block A is formed and said polymer block A has an average molecular weight of between 4,000 and 115,000 and said block A is terminated with a lithium ion;

(ii) adding a conjugated alkadiene having in the range of from 4 to 8 carbon atoms per molecule to the lithium terminated block and block copolymerizing it with said first block in the presence of a polar compound of the group consisting of ethers, thioethers, and tertiary amines, the molar ratio of said polar compound to lithium-alkyl catalyst being between 7 and 70, to thereby form a block copolymer terminated with lithium having 18 to 34 mol per cent of 1,2 configuration condensed alkadiene units in said B block and said alkadiene polymer B block having an average molecular weight of between 20,000 and 450,000;

(iii) adding thereto a monoalkenyl arene and block polymerizing it with the block copolymer of (ii) to form a block copolymer having the general configuration A-B-A or, alternatively, adding thereto a coupling agent to the A-B' block copolymer formed in step (ii) where B' is about one-half the molecular weight of B, thereby forming a polymer of the type A-B'-(B'-A)$_n$, where n is an integer from 1 to 5,

(iv) selectively hydrogenating the block copolymer, whereby the unsaturation of the diene block copolymer block B is reduced to less than 10% of its original value and therein forming a low vinyl content elastomeric block copolymer;

(b) forming a normal vinyl content elastomeric block copolymer having the general configuration A-B-A, wherein:

(i) each A block is a polymerized monoalkenyl aromatic hydrocarbon block having an average molecular weight of 4000 to 115,000;

(ii) said A blocks, in combination, comprise 5 to 35% by weight of the entire normal vinyl content elastomeric block copolymer;

(iii) the B block is a polymerized block of a conjugated alkadiene having in the range of from 4 to 8 carbon atoms per molecule consisting of 35 to 50 mol per cent condensed alkadiene units in the 1,2 configuration and said B block has an average molecular weight of between 20,000 and 450,000;

(iv) selectively hydrogenating the block copolymer, whereby the unsaturation of the diene block copolymer block B is reduced to less than 10% of its original value and therein forming a normal vinyl content elastomeric block copolymer;

(c) blending together 20 to 80 parts by weight of said low vinyl content elastomeric block copolymer with 80 to 20 parts by weight of said normal vinyl content elastomeric block copolymer and from 0.001 to 50 phr of a polyolefin; and

(d) optionally adding to said blend up to 125 phr of an oil;

(e) optionally adding to said blend up to 25 phr of a heat stabilizer, a slip-agent, an antioxidant, an anti-static agent, a plasticizer, a preservative, a colorant, a processing aid and/or a lubricant;

(f) optionally adding to said blend up to 1500 phr of a filler, the term "phr" referring to parts by weight per hundred parts by weight of the total elastomeric block copolymer.

8. A process as claimed in claim 7 wherein said polyolefin of step (c) is a high density polyethylene.

9. A process as claimed in claim 7 or 8, wherein said coupling agent in step (a) (iii) is a dihaloethane, a chlorosilane, an alkoxy silane, a diester or carbon dioxide.

10. Shaped articles containing a thermoplastic composition as claimed in any one of claims 1 to 6.

**Claims for the following Contracting State : ES**

1. A process for the preparation of a thermoplastic composition which process comprises mixing the following ingredients:

(a) 80 to 20 parts by weight of a normal vinyl content selectively hydrogenated elastomeric block copolymer having the general configuration A-B-A, wherein:

(i) each A block is a polymerized monoalkenyl aromatic hydrocarbon block having an average molecular weight of 4000 to 115,000;

(ii) said A blocks, in combination, comprise 5 to 35% by weight of the entire normal vinyl content elastomeric block copolymer;

(iii) the B block is a polymerized selectively hydrogenated block of a conjugated alkadiene having in the range of from 4 to 8 carbon atoms per molecule consisting, before the selective hydrogenation, of 35 to 50 mol per cent condensed alkadiene units in the 1,2 configuration and said B block has an average molecular weight of between 20,000 and 450,000;

(b) 20 to 80 parts by weight of a selectively hydrogenated low vinyl content elastomeric block copolymer having the general configuration A-B-A wherein:

(i) each A block is a polymerized monoalkenyl aromatic hydrocarbon block having an average molecular weight of 4000 to 115,000;

(ii) said A blocks, in combination, comprise 5 to 35% by weight of the entire low vinyl content elastomeric block copolymer;

(iii) the B block is a polymerized selectively hydrogenated block of a conjugated alkadiene having in the range of from 4 to 8 carbon atoms per molecule consisting, before the selective hydrogenation, of 18 to 34 mol per cent condensed alkadiene units in the 1,2 configuration, and said B block has an average molecular weight of between 20,000 and 450,000; and

(c) 0.001 to 50 phr of a polyolefin,

the term "phr" referring to parts by weight per hundred parts by weight of the total elastomeric block copolymer.

2. A process as claimed in claim 1, wherein the monoalkenyl aromatic hydrocarbon is styrene.

3. A process as claimed in claim 1 or 2, wherein the conjugated diene is 1,3-butadiene.

4. A process as claimed in any one of the preceding claims, wherein the polyolefin is a high density polyethylene.

5. A process as claimed in any one of the preceding claims, wherein block B in (b)(iii) consists, before the selective hydrogenation, of 21-31 mol per cent condensed butadiene units in the 1,2-configuration.

6. A process as claimed in any one of the preceding claims which further comprises adding to the composition

(a) up to 125 phr of an oil;

(b) up to 50 phr of an anionic polystyrene;

and

(c) up to 25 phr of a member of

a stabilizer, a slip-agent, an antioxidant, an antistatic agent, a plasticizer, a preservative, a colorant, a processing aid, and/or a lubricant;

(d) up to 1500 phr of a filler,

the term "phr" referring to parts by weight per hundred parts by weight of the total elastomeric block copolymer.

7. A process according to any one of the preceding claims, which process comprises the steps of:

(a) forming a low vinyl content selectively hydrogenated elastomeric block copolymer by the following steps (i) to (iv):

(i) polymerizing a monoalkenyl arene in the presence of an inert hydrocarbon solvent and a lithium- based catalyst whereby a polymer block A is formed and said polymer block A has an average molecular weight of between 4,000 and 115,000 and said block A is terminated with a lithium ion;

(ii) adding a conjugated alkadiene having in the range of from 4 to 8 carbon atoms per molecule to the lithium terminated block and block copolymerizing it with said first block in the presence of a polar compound of the group consisting of ethers, thioethers, and tertiary amines, the molar ratio of said polar compound to lithium-alkyl catalyst being between 7 and 70, to thereby form a block copolymer terminated with lithium having 18 to 34 mol per cent of 1,2 configuration condensed alkadiene units in said B block and said alkadiene polymer B block having an average molecular weight of between 20,000 and 450,000;

(iii) adding thereto a monoalkenyl arene and block polymerizing it with the block copolymer of (ii) to form a block copolymer having the general configuration A-B-A or, alternatively, adding thereto a coupling agent to the A-B' block copolymer formed in step (ii) where B' is about one-half the molecular weight of B, thereby forming a polymer of the type A-B'-(B'-A)$_n$, where n is an integer from 1 to 5,

(iv) selectively hydrogenating the block copolymer, whereby the unsaturation of the diene block copolymer block B is reduced to less than 10% of its original value and therein forming a low vinyl content elastomeric block copolymer;

(b) forming a normal vinyl content elastomeric block copolymer having the general configuration A-B-A, wherein:

(i) each A block is a polymerized monoalkenyl aromatic hydrocarbon block having an average molecular weight of 4000 to 115,000;

(ii) said A blocks, in combination, comprise 5 to 35% by weight of the entire normal vinyl content elastomeric block copolymer;

(iii) the B block is a polymerized block of a conjugated alkadiene having in the range of from 4 to 8 carbon atoms per molecule consisting of 35 to 50 mol per cent condensed alkadiene units in the 1,2 configuration and said B block has an average molecular weight of between 20,000 and 450,000;

(iv) selectively hydrogenating the block copolymer, whereby the unsaturation of the diene block copolymer block B is reduced to less than 10% of its original value and therein forming a normal vinyl content elastomeric block copolymer;

(c) blending together 20 to 80 parts by weight of said low vinyl content elastomeric block copolymer with 80 to 20 parts by weight of said normal vinyl content elastomeric block copolymer and from 0.001 to 50 phr of a polyolefin; and

(d) optionally adding to said blend up to 125 phr of an oil;

(e) optionally adding to said blend up to 25 phr of a heat stabilizer, a slip-agent, an antioxidant, an anti-static agent, a plasticizer, a preservative, a colorant, a processing aid and/or a lubricant;

(f) optionally adding to said blend up to 1500 phr of a filler, the term "phr" referring to parts by weight per hundred parts by weight of the total elastomeric block copolymer.

**8.** A process as claimed in claim 7 wherein said polyolefin of step (c) is a high density polyethylene.

**9.** A process as claimed in claim 7 or 8, wherein said coupling agent in step (a) (iii) is a dihaloethane, a chlorosilane, an alkoxy silane, a diester or carbon dioxide.

**Patentansprüche**
**Patentansprüche für folgende Vertragsstaaten : BE, DE, FR, GB, IT, NL, SE**

**1.** Eine thermoplastische Zusammensetzung, umfassend

(a) 80 bis 20 Gewichtsteile eines einen normalen Vinylgehalt aufweisenden selektiv hydrierten elastomeren Blockcopolymers mit der allgemeinen Konfiguration A-B-A, in der

(i) jeder A-Block ein polymerisierter monoalkenyl-aromatischer Kohlenwasserstoff-Block mit einem durchschnittlichen Molekulargewicht von 4000 bis 115000 ist,

(ii) diese A-Blöcke gemeinsam 5 bis 35 Gewichtsprozent des gesamten, einen normalen Vinylgehalt aufweisenden elastomeren Blockcopolymers umfassen,

(iii) der B-Block ein polymerisierter selektiv hydrierter Block eines konjugierten Alkadiens mit im Bereich von 4 bis 8 liegenden Kohlenstoffatomen je Molekül ist, der vor der selektiven Hydrierung aus 35 bis 50 Molprozent kondensierter Alkadien-Einheiten in der 1,2-Konfiguration besteht, und wobei dieser B-Block ein durchschnittliches Molekulargewicht zwischen 20000 und 450000 hat;

(b) 20 bis 80 Gewichtsteilen eines selektiv hydrierten, einen niederen Vinylgehalt aufweisenden elastomeren Blockcopolymers der allgemeinen Konfiguration A-B-A, in der

(i) jeder A-Block ein polymerisierter monoalkenyl-aromatischer Kohlenwasserstoff-Block mit einem durchschnittlichen Molekulargewicht von 4000 bis 115000 ist,

(ii) diese A-Blöcke gemeinsam 5 bis 35 Gewichtsprozent des gesamten, einen niedrigen Vinylgehalt aufweisenden elastomeren Blockcopolymers umfassen,

(iii) der B-Block ein polymerisierter selektiv hydrierter Block eines konjugierten Alkadiens mit im Bereich 4 bis 8 liegenden Kohlenstoffatomen je Molekül ist, der vor der selektiven Hydrierung aus 18 bis 34 Molprozent kondensierter Alkadien-Einheiten in der 1,2-Konfiguration besteht, und wobei dieser B-Block ein durchschnittliches Molekulargewicht zwischen 20000 und 450000 hat; und

(c) 0,001 bis 50 Massenteile eines Polyolefins (wobei sich der Ausdruck "Massenteile" auf Gewichtsteile je 100 Gewichtsteile des gesamten elastomeren Blockcopolymers bezieht).

2. Eine Zusammensetzung wie in Anspruch 1 beansprucht, in der der monoalkenyl-aromatische Kohlenwasserstoff Styrol ist.

3. Eine Zusammensetzung wie in Anspruch 1 oder 2 beansprucht, in der das konjugierte Dien 1,3-Butadien ist.

4. Eine Zusammensetzung wie in irgendeinem der vorstehenden Ansprüche beansprucht, in der das Polyolefin ein Polyethylen hoher Dichte ist.

5. Eine Zusammensetzung wie in irgendeinem der vorstehenden Ansprüche beansprucht, in der der Block B in (b)(iii) vor der selektiven Hydrierung aus 21 bis 31 Molprozent kondensierter Butadien-Einheiten in der 1,2-Konfiguration besteht.

6. Eine Zusammensetzung wie in irgendeinem der vorstehenden Ansprüche beansprucht, weiterhin umfassend
(a) bis zu 125 Massenteile eines Öls;
(b) bis zu 50 Massenteile eines anionischen Polystyrols und
(c) bis zu 25 Massenteile eines Mitglieds eines Stabilisators, eines Gleitmittels (Anti-Blockmittel), eines Antioxidationsmittels, eines Antistatikums, eines Weichmachers, eines Konservierungsmittels, eines Farbstoffs, eines Verfahrenshilfsmittels und/oder eines Schmiermittels;
(d) bis zu 1500 Massenteile eines Füllstoffs,(wobei sich der Ausdruck "Massenteile" auf Gewichtsteile je 100 Gewichtsteile des gesamten elastomeren Blockcopolymers bezieht).

7. Ein Verfahren zur Herstellung einer thermoplastischen Zusammensetzung wie in irgendeinem der vorstehenden Ansprüche beansprucht, wobei das Verfahren umfaßt
(a) Bilden eines selektiv hydrierten, einen niedrigen Vinylgehalt aufweisenden elastomeren Blockcopolymers nach den folgenden Stufen (i) bis (iv):
(i) Polymerisieren eines Monoalkenyl-Arens in Gegenwart eines inerten Kohlenwasserstofflösungsmittels und eines Katalysators auf Lithium-Basis, wodurch ein Polymerblock A gebildet wird und der Polymerblock A ein durchschnittliches Molekulargewicht zwischen 4000 und 115000 hat und Polymerblock A endständig Lithiumionen aufweist;
(ii)Zufügen eines konjugierten Alkadiens mit im Bereich von 4 bis 8 liegenden Kohlenstoffatomen je Molekül zu dem Block mit endständigem Lithium und Blockcopolymerisieren mit diesem ersten Block in Gegenwart einer polaren Verbindung, bestehend aus der Gruppe Äther, Thioäther und tertiäre Amine, wobei das Molverhältnis von dieser polaren Verbindung zu dem Lithium-alkyl-Katalysator zwischen 7 und 70 liegt, und dadurch Bilden eines Blockcopolymers mit endständigem Lithium mit 18 bis 34 Molprozent einer 1,2-Konfiguration kondensierter Alkadien-Einheiten in diesem Block B und wobei dieser Alkadien-Polymer-B-Block ein durchschnittliches Molekulargewicht zwischen 20000 und 450000 hat;
(iii)Zufügen hierzu eines Monoalkenylarens und Blockpolymerisieren mit dem Blockcopolymer aus (ii) zur Bildung eines Blockcopolymers mit der allgemeinen Konfiguration A-B-A oder, alternativ, dazu Hinzufügen eines Kupplungsmittels zu dem in Stufe (ii) gebildeten A-B'-Blockcopolymers, wobei B' etwa die Hälfte des Molekulargewichts von B ist, und dadurch Bilden eines Polymers des Typs A-B'-(B'-A)$_n$, wobi n eine ganze Zahl von 1 bis 5 ist;
(iv)selektives Hydrieren des Blockcopolymers, wodurch die Ungesättigtkeit des Dien-Blockcopolymer-Blocks B auf weniger als 10% seines ursprünglichen Wertes herabgesetzt wird, und darin Bilden eines einen niedrigen Vinylgehalt aufweisenden elastomeren Blockcopolymers;
(b) Bilden eines einen normalen Vinylgehalt aufweisenden elastomeren Blockcopolymers der allgemeinen Konfiguration A-B-A, wobei
(i) jeder A-Block ein polymerisierter monoalkenyl-aromatischer Kohlenwasserstoff-Block mit einem durchschnittlichen Molekulargewicht von 4000 bis 115000 ist,
(ii) diese A-Blöcke gemeinsam 5 bis 35 Gewichtsprozent des gesamten einen normalen Vinylgehalt aufweisenden elastomeren Blockcopolymers umfassen,

(iii)der B-Block ein polymerisierter Block eines konjugierten Alkadiens mit im Bereich von 4 bis 8 liegenden Kohlenstoffatomen je Molekül, bestehend aus 35 bis 50 Molprozent kondensierter Alkadien-Einheiten in der 1,2-Konfiguration, ist, und dieser B-Block ein durchschnittliches Molekulargewicht zwischen 20000 und 450000 hat;

(iv)selektives Hydrieren des Blockcopolymers, wodurch die Ungesättigtkeit des Dien-Blockcopolymer-Blocks-B auf weniger als 10% seines ursprünglichen Wertes herabgesetzt wird, und darin Bilden eines einen normalen Vinylgehalt aufweisenden elastomeren Blockcopolymers,

(c) Vermischen miteinander 20 bis 80 Gewichtsteile dieses einen niedrigen Vinylgehalt aufweisenden elastomeren Blockcopolymers mit 80 bis 20 Gewichtsteilen dieses einen normalen Vinylgehalt aufweisenden elastomeren Blockcopolymers und 0,001 bis 50 Massenteile eines Polyolefins; und

(d) gegebenenfalls Zufügen zu dieser Mischung bis zu 125 Massenteile eines Öls;

(e) gegebenenfalls Zufügen zu dieser Mischung bis zu 25 Massenteile eines Wärmestabilisators, eines Gleitmittels, eines Antioxidationsmittels, eines Antistatikums, eines Weichmachers, eines Konservierungsmittels, eines Farbstoffs, eines Verfahrenshilfsmittels und/oder eines Schmiermittels;

(f) gegebenenfalls Zufügen zu dieser Mischung bis zu 1500 Massenteile eines Füllstoffs
(wobei sich der Ausdruck "Massenteile" auf Gewichtsteile je 100 Gewichtsteile des gesamten elastomeren Blockcopolymers bezieht).

8. Ein Verfahren wie in Anspruch 7 beansprucht, wobei das Polyolefin in Stufe (c) ein Polyethylen hoher Dichte ist.

9. Ein Verfahren wie in den Ansprüchen 7 oder 8 beansprucht, wobei das Kupplungsmittel in Stufe (a)(iii) ein Dihalogenethan, ein Chlorsilan, ein Alkoxysilan, ein Diester oder Kohlendioxid ist.

10. Formstück, enthaltend eine thermoplastische Zusammensetzung wie in irgendeinem der Ansprüche 1 bis 6 beansprucht.

**Patentansprüche für folgenden Vertragsstaat : ES**

1. Verfahren zur Herstellung einer thermoplastischen Zusammensetzung, umfassend ein Verfahren durch Vermischen der folgenden Bestandteile:

(a) 80 bis 20 Gewichtsteile eines einen normalen Vinylgehalt aufweisenden selektiv hydrierten elastomeren Blockcopolymers mit der allgemeinen Konfiguration A-B-A, in der

(i) jeder A-Block ein polymerisierter monoalkenyl-aromatischer Kohlenwasserstoff-Block mit einem durchschnittlichen Molekulargewicht von 4000 bis 115000 ist,

(ii)diese A-Blöcke gemeinsam 5 bis 35 Gewichtsprozent des gesamten, einen normalen Vinylgehalt aufweisenden elastomeren Blockcopolymers umfassen,

(iii)der B-Block ein polymerisierter selektiv hydrierter Block eines konjugierten Alkadiens mit im Bereich von 4 bis 8 liegenden Kohlenstoffatomen je Molekül ist, der vor der selektiven Hydrierung aus 35 bis 50 Molprozent kondensierter Alkadien-Einheiten in der 1,2-Konfiguration besteht, und wobei dieser B-Block ein durchschnittliches Molekulargewicht zwischen 20000 und 450000 hat;

(b) 20 bis 80 Gewichtsteilen eines selektiv hydrierten, einen niederen Vinylgehalt aufweisenden elastomeren Blockcopolymers der allgemeinen Konfiguration A-B-A, in der

(i) jeder A-Block ein polymerisierter monoalkenyl-aromatischer Kohlenwasserstoff-Block mit einem durchschnittlichen Molekulargewicht von 4000 bis 115000 ist,

(ii)diese A-Blöcke gemeinsam 5 bis 35 Gewichtsprozent des gesamten, einen niedrigen Vinylgehalt aufweisenden elastomeren Blockcopolymers umfassen,

(iii)der B-Block ein polymerisierter selektiv hydrierter Block eines konjugierten Alkadiens mit im Bereich 4 bis 8 liegenden Kohlenstoffatomen je Molekül ist, der vor der selektiven Hydrierung aus 18 bis 34 Molprozent kondensierter Alkadien-Einheiten in der 1,2-Konfiguration besteht, und wobei dieser B-Block ein durchschnittliches Molekulargewicht zwischen 20000 und 450000 hat; und

(c) 0,001 bis 50 Massenteile eines Polyolefins (wobei sich der Ausdruck "Massenteile" auf Gewichtsteile je 100 Gewichtsteile des gesamten elastomeren Blockcopolymers bezieht).

2. Ein Verfahren wie in Anspruch 1 beansprucht, in dem der monoalkenyl-aromatische Kohlenwasserstoff Styrol ist.

**3.** Ein Verfahren wie in Anspruch 1 oder 2 beansprucht, in dem das konjugierte Dien 1,3-Butadien ist.

**4.** Ein Verfahren wie in irgendeinem der vorstehenden Ansprüche beansprucht, in dem das Polyolefin ein Polyethylen hoher Dichte ist.

**5.** Ein Verfahren wie in irgendeinem der vorstehenden Ansprüche beansprucht, in dem der Block B in (b)-(iii) vor der selektiven Hydrierung aus 21 bis 31 Molprozent kondensierter Butadien-Einheiten in der 1,2-Konfiguration besteht.

**6.** Ein Verfahren wie in irgendeinem der vorstehenden Ansprüche beansprucht, weiterhin zufügend zu der Zusammensetzung
(a) bis zu 125 Massenteile eines Öls;
(b) bis zu 50 Massenteile eines anionischen Polystyrols und
(c) bis zu 25 Massenteile eines Mitglieds eines Stabilisators, eines Gleitmittels (Anti-Blockmittel), eines Antioxidationsmittels, eines Antistatikums, eines Weichmachers, eines Konservierungsmittels, eines Farbstoffs, eines Verfahrenshilfsmittels und/oder eines Schmiermittels;
(d) bis zu 1500 Massenteile eines Füllstoffs,(wobei sich der Ausdruck "Massenteile" auf Gewichtsteile je 100 Gewichtsteile des gesamten elastomeren Blockcopolymers bezieht).

**7.** Ein Verfahren zur Herstellung einer thermoplastischen Zusammensetzung wie in irgendeinem der vorstehenden Ansprüche beansprucht, wobei das Verfahren umfaßt
(a) Bilden eines selektiv hydrierten, einen niedrigen Vinylgehalt aufweisenden elastomeren Blockcopolymers nach den folgenden Stufen (i) bis (iv):
(i) Polymerisieren eines Monoalkenyl-Arens in Gegenwart eines inerten Kohlenwasserstofflösungsmittels und eines Katalysators auf Lithium-Basis, wodurch ein Polymerblock A gebildet wird und der Polymerblock A ein durchschnittliches Molekulargewicht zwischen 4000 und 115000 hat und Polymerblock A endständig Lithiumionen aufweist;
(ii)Zufügen eines konjugierten Alkadiens mit im Bereich von 4 bis 8 liegenden Kohlenstoffatomen je Molekül zu dem Block mit endständigem Lithium und Blockcopolymerisieren mit diesem ersten Block in Gegenwart einer polaren Verbindung, bestehend aus der Gruppe Äther, Thioäther und tertiäre Amine, wobei das Molverhältnis von dieser polaren Verbindung zu dem Lithium-alkyl-Katalysator zwischen 7 und 70 liegt, und dadurch Bilden eines Blockcopolymers mit endständigem Lithium mit 18 bis 34 Molprozent einer 1,2-Konfiguration kondensierter Alkadien-Einheiten in diesem Block B und wobei dieser Alkadien-Polymer-B-Block ein durchschnittliches Molekulargewicht zwischen 20000 und 450000 hat;
(iii)Zufügen hierzu eines Monoalkenylarens und Blockpolymerisieren mit dem Blockcopolymer aus (ii) zur Bildung eines Blockcopolymers mit der allgemeinen Konfiguration A-B-A oder, alternativ, dazu Hinzufügen eines Kupplungsmittels zu dem in Stufe (ii) gebildeten A-B'-Blockcopolymers, wobei B' etwa die Hälfte des Molekulargewichts von B ist, und dadurch Bilden eines Polymers des Typs A-B'-(B-A)$_n$, wobi n eine ganze Zahl von 1 bis 5 ist;
(iv)selektives Hydrieren des Blockcopolymers, wodurch die Ungesättigtkeit des Dien-Blockcopolymer-Blocks B auf weniger als 10% seines ursprünglichen Wertes herabgesetzt wird, und darin Bilden eines einen niedrigen Vinylgehalt aufweisenden elastomeren Blockcopolymers;
(b) Bilden eines einen normalen Vinylgehalt aufweisenden elastomeren Blockcopolymers der allgemeinen Konfiguration A-B-A, wobei
(i) jeder A-Block ein polymerisierter monoalkenyl-aromatischer Kohlenwasserstoff-Block mit einem durchschnittlichen Molekulargewicht von 4000 bis 115000 ist,
(ii) diese A-Blöcke gemeinsam 5 bis 35 Gewichtsprozent des gesamten einen normalen Vinylgehalt aufweisenden elastomeren Blockcopolymers umfassen,
(iii)der B-Block ein polymerisierter Block eines konjugierten Alkadiens mit im Bereich von 4 bis 8 liegenden Kohlenstoffatomen je Molekül, bestehend aus 35 bis 50 Molprozent kondensierter Alkadien-Einheiten in der 1,2-Konfiguration, ist, und dieser B-Block ein durchschnittliches Molekulargewicht zwischen 20000 und 450000 hat;
(iv)selektives Hydrieren des Blockcopolymers, wodurch die Ungesättigtkeit des Dien-Blockcopolymer-Blocks-B auf weniger als 10% seines ursprünglichen Wertes herabgesetzt wird, und darin Bilden eines einen normalen Vinylgehalt aufweisenden elastomeren Blockcopolymers,
(c) Vermischen miteinander 20 bis 80 Gewichtsteile dieses einen niedrigen Vinylgehalt aufweisenden elastomeren Blockcopolymers mit 80 bis 20 Gewichtsteilen dieses einen normalen Vinylgehalt aufweisenden elastomeren Blockcopolymers und 0,001 bis 50 Massenteile eines Polyolefins; und

(d) gegebenenfalls Zufügen zu dieser Mischung bis zu 125 Massenteile eines Öls;

(e) gegebenenfalls Zufügen zu dieser Mischung bis zu 25 Massenteile eines Wärmestabilisators, eines Gleitmittels, eines Antioxidationsmittels, eines Antistatikums, eines Weichmachers, eines Konservierungsmittels, eines Farbstoffs, eines Verfahrenshilfsmittels und/oder eines Schmiermittels;

(f) gegebenenfalls Zufügen zu dieser Mischung bis zu 1500 Massenteile eines Füllstoffs (wobei sich der Ausdruck "Massenteile" auf Gewichtsteile je 100 Gewichtsteile des gesamten elastomeren Blockcopolymers bezieht).

8. Ein Verfahren wie in Anspruch 7 beansprucht, wobei das Polyolefin in Stufe (c) ein Polyethylen hoher Dichte ist.

9. Ein Verfahren wie in den Ansprüchen 7 oder 8 beansprucht, wobei das Kupplungsmittel in Stufe (a)(iii) ein Dihalogenethan, ein Chlorsilan, ein Alkoxysilan, ein Diester oder Kohlendioxid ist.

**Revendications**
**Revendications pour les Etats contractants suivants : BE, DE, FR, GB, IT, NL, SE**

1. Composition thermoplastique qui comprend :

(a) de 80 à 20 parties en poids d'un copolymère séquencé élastomère sélectivement hydrogéné à teneur normale en vinyle, ayant la configuration générale A-B-A, dans lequel :

(i) chaque séquence A est une séquence hydrocarbonée monoalcénylaromatique polymérisée ayant une masse moléculaire moyenne de 4000 à 115.000 ;

(ii) lesdites séquences A, en combinaison, constituent de 5 à 35% en poids de tout le copolymère séquencé élastomère à teneur normale en vinyle ;

(iii) la séquence B est un polymère sélectivement hydrogéné d'un alcadiène conjugué contenant de 4 à 8 atomes de carbone par molécule et consistant, avant l'hydrogénation sélective, en 35 à 50 moles% de motifs d'alcadiène condensé de configuration 1,2 et ladite séquence B a une masse moléculaire moyenne de 20.000 à 450.000 ;

(b) de 20 à 80 parties en poids d'un copolymère séquencé élastomère hydrogéné et à basse teneur en vinyle ayant la configuration générale A-B-A, dans lequel :

(i) chaque séquence A est une séquence hydrocarbonée monoalcénylaromatique polymérisée ayant une masse moléculaire moyenne de 4000 à 115000 ;

(ii) lesdites séquences A, en combinaison, constituent de 5 à 35% en poids de tout le copolymère séquencé élastomère à faible teneur en vinyle ;

(iii) la séquence B est une séquence sélectivement hydrogénée et polymérisée d'un alcadiène conjugué contenant de 4 à 8 atomes de carbone par molécule et consistant, avant l'hydrogénation sélective, en 18 à 34 moles% de motifs d'alcadiène condensé de configuration 1,2, et ladite séquence 8 ayant une masse moléculaire moyenne de 20.000 à 450.000 ; et

(c) de 0,001 à 50 p% d'une polyoléfine, le terme p% désignant les parties en poids par 100 parties en poids du copolymère séquencé élastomère total.

2. Composition selon la revendication 1, dans laquelle l'hydrocarbure monoalcénylaromatique est le styrène.

3. Composition selon la revendication 1 ou 2, dans laquelle le diène conjugué est le 1,3-butadiène.

4. Composition selon l'une quelconque des revendications précédentes , dans laquelle la polyoléfine est un polyéthylène de haute densité.

5. Composition selon l'une quelconque des revendications précédentes dans lequel la séquence B dans (b)(iii) consiste avant hydrogénation sélective, en 21 à 31 moles% de motifs de butadiène condensé de configuration 1,2.

6. Composition selon l'une quelconque des revendications précédentes qui comprend en outre :

(a) jusqu'à 125 p% d'une huile ;

(b) jusqu'à 50 p% d'un polystyrène anionique, et

(c) jusqu'à 25 p% d'un élément choisi parmi un stabilisant, un agent de glissement, un antioxydant, un antistatique, un plastifiant, un conservateur, un colorant, un adjuvant de traitement et/ou un lubrifiant ;

(d) jusqu'à 1500 p% d'une charge, le terme "p%" désignant les parties en poids par 100 parties en poids du copolymère séquencé élastomère total.

**7.** Procédé de préparation d'une composition thermoplastique selon l'une quelconque des revendications précédentes, procédé qui consiste :

(a) à former un copolymère séquencé élastomère sélectivement hydrogéné à basse teneur en vinyle par les stades suivants (i) à (iv) :

(i) on polymérise un monoalcénylarène en présence d'un solvant hydrocarboné inerte et d'un catalyseur à base de lithium, de sorte qu'on obtient une séquence polymère A et ladite séquence polymère A présente une masse moléculaire moyenne de 4000 à 115.000 et ladite séquence A est terminée par un ion lithium ;

(ii) on ajoute un alcadiène conjugué contenant de 4 à 8 atomes de carbone par molécule à la séquence terminée par le lithium et on effectue la copolymérisation séquencée de celui-ci avec ladite première séquence en présence d'un composé polaire choisi parmi les éthers, les thioéthers, et les amines tertiaires, le rapport molaire dudit composé polaire au catalyseur d'alkyl-lithium étant de 7 à 70, pour former ainsi un copolymère séquencé terminé par le lithium contenant de 18 à 34 moles% de motifs alcadiène condensé de configuration 1,2 dans ladite séquence B et ladite séquence polymère d'alcadiène B ayant une masse moléculaire moyenne de 20.000 à 450.000 ;

(iii) on ajoute un monoalcénylarène et on effectue une polymérisation séquencée avec le copolymère séquencé de (ii) pour former un copolymère séquencé de configuration générale A-B-A ou, en variante, on ajoute un agent de couplage au copolymère séquencé A-B' du stade (ii), B' ayant environ la moitié de la masse moléculaire de B, pour ainsi former un polymère du type A-B'-(B'-A)$_n$ dans lequel n est un nombre entier de 1 à 5,

(iv) on hydrogène sélectivement le copolymère séquencé de sorte qu'on réduit l'insaturation de la séquence B du copolymère séquencé de diène à moins de 10% de sa valeur initiale et on forme un copolymère séquencé élastomère à basse teneur en vinyle ;

(b) à former un copolymère séquencé élastomère à teneur normale en vinyle de configuration générale A-B-A, dans lequel :

(i) chaque séquence A est une séquence hydrocarbonée monoalcénylaromatique polymérisée ayant une masse moléculaire moyenne de 4000 à 115000 ;

(ii) lesdites séquences A, en combinaison, constituent de 5 à 35% en poids du copolymère séquencé élastomère entier à teneur normale en vinyle ;

(iii) la séquence B est une séquence polymérisée d'un alcadiène conjugué contenant de 4 à 8 atomes de carbone par molécule et consistant en 35 à 50 moles% de motifs d'alcadiène condensé de configuration 1,2 et ladite séquence B possède une masse moléculaire moyenne de 20.000 à 450.000;

(iv) on hydrogène sélectivement le copolymère séquencé de sorte qu'on réduit l'insaturation de la séquence B du copolymère séquencé de diène à moins de 10% de sa valeur initiale et on forme un copolymère séquencé élastomère à teneur normale en vinyle ;

(c) à mélanger ensemble de 20 à 80 parties en poids dudit copolymère séquencé élastomère à basse teneur en vinyle avec 80 à 20 parties en poids dudit copolymère séquencé élastomère à teneur normale en vinyle et 0,001 à 50 p% d'une polyoléfine ; et

(d) à ajouter facultativement audit mélange jusqu'à 125 p% d'une huile ;

(e) à ajouter facultativement audit mélange jusqu'à 25 p% d'un stabilisant thermique, d'un agent de glissement, d'un antioxydant, d'un antistatique, d'un plastifiant, d'un conservateur, d'un colorant, d'un adjuvant de traitement et/ou d'un lubrifiant ;

(f) à ajouter facultativement audit mélange jusqu'à 1500 p% d'une charge, le terme p% désignant les parties en poids par 100 parties en poids du copolymère séquencé élastomère total.

**8.** Procédé selon la revendication 7, dans lequel ladite polyoléfine au stade (c) est un polyéthylène haute densité.

**9.** Procédé selon la revendication 7 ou 8, dans lequel ledit agent de couplage au stade (a)(iii) est un dihalogènéthane, un chlorosilane, un alcoxysilane, un diester ou l'anhydride carbonique.

18

**10.** Articles façonnés contenant une composition thermoplastique selon l'une quelconque des revendications 1 à 6.

**Revendications pour l'Etat contractant suivant : ES**

**1.** Procédé de préparation d'une composition thermoplastique qui consiste à mélanger les ingrédients suivants :

(a) de 80 à 20 parties en poids d'un copolymère séquencé élastomère sélectivement hydrogéné à teneur normale en vinyle, ayant la configuration générale A-B-A, dans lequel :

(i) chaque séquence A est une séquence hydrocarbonée monoalcénylaromatique polymérisée ayant une masse moléculaire moyenne de 4000 à 115.000 ;
(ii) lesdites séquences A, en combinaison, constituent de 5 à 35% en poids de tout le copolymère séquencé élastomère à teneur normale en vinyle ;
(iii) la séquence B est un polymère sélectivement hydrogéné d'un alcadiène conjugué contenant de 4 à 8 atomes de carbone par molécule et consistant, avant l'hydrogénation sélective, en 35 à 50 moles% de motifs d'alcadiène condensé de configuration 1,2 et ladite séquence B a une masse moléculaire moyenne de 20.000 à 450.000 ;

(b) de 20 à 80 parties en poids d'un copolymère séquencé élastomère hydrogéné et à basse teneur en vinyle ayant la configuration générale A-B-A, dans lequel :

(i) chaque séquence A est une séquence hydrocarbonée monoalcénylaromatique polymérisée ayant une masse moléculaire moyenne de 4000 à 115000 ;
(ii) lesdites séquences A, en combinaison, constituent de 5 à 35% en poids de tout le copolymère séquencé élastomère à faible teneur en vinyle ;
(iii) la séquence B est une séquence sélectivement hydrogénée et polymérisée d'un alcadiène conjugué contenant de 4 à 8 atomes de carbone par molécule et consistant, avant l'hydrogénation sélective, en 18 à 34 moles% de motifs d'alcadiène condensé de configuration 1,2, et ladite séquence B ayant une masse moléculaire moyenne de 20.000 à 450.000 ; et

(c) de 0,001 à 50 p% d'une polyoléfine, le terme p% désignant les parties en poids par 100 parties en poids du copolymère séquencé élastomère total.

**2.** Procédé selon la revendication 1, dans lequel l'hydrocarbure monoalcénylaromatique est le styrène.

**3.** Procédé selon la revendication 1 ou 2, dans lequel le diène conjugué est le 1,3-butadiène.

**4.** Procédé selon l'une quelconque des revendications précédentes, dans lequel la polyoléfine est un polyéthylène haute densité.

**5.** Procédé selon l'une quelconque des revendications précédentes dans lequel la séquence B dans (b)(iii) comprend, avant hydrogénation sélective, de 20 à 31 moles de motifs de butadiène condensé de configuration 1,2.

**6.** Procédé selon l'une quelconque des revendications précédentes, qui consiste en outre à ajouter à la composition :

(a) jusqu'à 125 p% d'une huile ;
(b) jusqu'à 50 p% d'un polystyrène anionique, et
(c) jusqu'à 25 p% d'un élément choisi parmi un stabilisant, un agent de glissement, un antioxydant, un antistatique, un plastifiant, un conservateur, un colorant, un adjuvant de traitement et/ou un lubrifiant ;
(d) jusqu'à 1500 p% d'une charge, le terme "p%" désignant les parties en poids par 100 parties en poids du copolymère séquencé élastomère total.

**7.** Procédé selon l'une quelconque des revendications précédentes, procédé qui consiste :

(a) à former un copolymère séquencé élastomère sélectivement hydrogéné à basse teneur en vinyle par les stades suivants (i) à (iv) :

(i) on polymérise un monoalcénylarène en présence d'un solvant hydrocarboné inerte et d'un catalyseur à base de lithium, de sorte qu'on obtient une séquence polymère A et ladite séquence polymère A présente une masse moléculaire moyenne de 4000 à 115.000 et ladite séquence A est terminée par un ion lithium ;

(ii) on ajoute un alcadiène conjugué contenant de 4 à 8 atomes de carbone par molécule à la séquence terminée par le lithium et on effectue la copolymérisation séquencée de celui-ci avec ladite première séquence en présence d'un composé polaire choisi parmi les éthers, les thioéthers, et les amines tertiaires, le rapport molaire dudit composé polaire au catalyseur d'alkyl-lithium étant de 7 à 70, pour former ainsi un copolymère séquencé terminé par le lithium contenant de 18 à 34 moles% de motifs alcadiène condensé de configuration 1,2 dans ladite séquence B et ladite séquence polymère d'alcadiène B ayant une masse moléculaire moyenne de 20.000 à 450.000 ;

(iii) on ajoute un monoalcénylarène et on effectue une polymérisation séquencée avec le copolymère séquencé de (ii) pour former un, copolymère séquencé de configuration générale A-B-A ou, en variante, on ajoute un agent de couplage au copolymère séquencé A-B' du stade (ii), B' ayant environ la moitié de la masse moléculaire de B, pour ainsi former un polymère du type A-B'-(B'-A)$_n$ dans lequel n est un nombre entier de 1 à 5,

(iv) on hydrogène sélectivement le copolymère séquencé de sorte qu'on réduit l'insaturation de la séquence B du copolymère séquencé de diène à moins de 10% de sa valeur initiale et on forme un copolymère séquencé élastomère à basse teneur en vinyle ;

(b) à former un copolymère séquencé élastomère à teneur normale en vinyle de configuration générale A-B-A, dans lequel :

(i) chaque séquence A est une séquence hydrocarbonée monoalcénylaromatique polymérisée ayant une masse moléculaire moyenne de 4000 à 115000 ;

(ii) lesdites séquences A, en combinaison, constituent de 5 à 35% en poids du copolymère séquencé élastomère entier à teneur normale en vinyle ;

(iii) la séquence B est une séquence polymérisée d'un alcadiène conjugué contenant de 4 à 8 atomes de carbone par molécule et consistant en 35 à 50 moles% de motifs d'alcadiène condensé de configuration 1,2 et ladite séquence B possède une masse moléculaire moyenne de 20.000 à 450.000;

(iv) on hydrogène sélectivement le copolymère séquencé de sorte qu'on réduit l'insaturation de la séquence B du copolymère séquencé de diène à moins de 10% de sa valeur initiale et on forme un copolymère séquencé élastomère à teneur normale en vinyle ;

(c) à mélanger ensemble de 20 à 80 parties en poids dudit copolymère séquencé élastomère à basse teneur en vinyle avec 80 à 20 parties en poids dudit copolymère séquencé élastomère à teneur normale en vinyle et 0,001 à 50 p% d'une polyoléfine ; et

(d) à ajouter facultativement audit mélange jusqu'à 125 p% d'une huile ;

(e) à ajouter facultativement audit mélange jusqu'à 25 p% d'un stabilisant thermique, d'un agent de glissement, d'un antioxydant, d'un antistatique, d'un plastifiant, d'un conservateur, d'un colorant, d'un adjuvant de traitement et/ou d'un lubrifiant ;

(f) à ajouter facultativement audit mélange jusqu'à 1500 p% d'une charge, le terme p% désignant les parties en poids par 100 parties en poids du copolymère séquencé élastomère total.

8. Procédé selon la revendication 7, dans lequel ladite polyoléfine du stade (c) est un polyéthylène haute densité.

9. Procédé selon la revendication 7 ou 8, dans lequel ledit agent de couplage au stade (a)(iii) est un dihalogènéthane, un chlorosilane, un alcoxysilane, un diester, ou l'anhydride carbonique.